# EUROPÄISCHE PATENTSCHRIFT

(11) **EP 2 783 925 B1**
(45) Veröffentlichungstag und Bekanntmachung des Hinweises auf die Patenterteilung: **01.04.2015**
(21) Anmeldenummer: 14158712.1
(22) Anmeldetag: 11.03.2014
(51) Int. Cl.: B60R 22/46

(54) **Gurtstrafferantrieb**
Belt pre-tensioning device
Entraînement de prétensionneur de ceinture

(30) Priorität: 25.03.2013 DE 102013205246
(43) Veröffentlichungstag der Anmeldung: 01.10.2014
(73) Patentinhaber: IMS Gear GmbH, 78166 Donaueschingen (DE)
(72) Erfinder: Koop, Matthias, 78166 Donaueschingen (DE); Lucht, Andreas, 25358 Horst (DE); Süllau, Patrick, 24558 Henstedt-Ulzburg (DE)
(74) Vertreter: Westphal, Mussgnug & Partner Patentanwälte mbB

(56) Entgegenhaltungen:
- DE-A1-102008 048 339

## Beschreibung

Die Erfindung betrifft einen Gurtstrafferantrieb zum Straffen eines um eine Wickelwelle aufwickelbaren Sicherheitsgurtes gemäß Oberbegriff des Patentanspruchs 1.

Ein solcher reversibler Gurtstrafferantrieb ist bspw. aus der DE 10 2008 048 339 A1 bekannt, bei welchem ein Elektromotor über ein erstes, als Schraubradgetriebe ausgebildetes Getriebe eine Spindelwelle antreibt, die über ein zweites Getriebe ihrerseits ein Abtriebsrad antreibt, das zum Aufwickeln eines Sicherheitsgurtes auf einer Wickelwelle drehfest angeordnet ist. Dieses zweite Getriebe wird von einer auf der Spindelwelle angeordneten Schnecke und einer Außenschrägverzahnung des Abtriebsrades gebildet.

Ein reversibler Gurtstraffer wird bei Bedarf, also bspw. bei einem leichten Crash oder bei einem drohenden Crash, bei Geländefahrten oder bei Auftreten von starken Bremsverzögerungen des Fahrzeugs aktiviert, wodurch eine Straffung des Sicherheitsgurtes bewirkt wird. Zum Aufrechterhalten der Gurtstraffung in solchen Situationen wird der Elektromotor mit einer hohen Stromstärke bestromt, wodurch das Bordnetz des Fahrzeugs unerwünscht hoch belastet wird.

Die Auslösung des Gurtstraffers im Crashfall erfolgt pyrotechnisch und stellt eine Volllaststraffung dar, die zu einem Entkuppeln des Gurtstraffers vom Elektromotor führt. Das anschließende Halten des Sicherheitsgurtes mittels des elektrischen Antriebes durch Restbestromung des Elektromotors führt dazu, dass dieser wieder auf den Gurtstraffer aufgekuppelt wird und dabei Störungen in der Kraftbegrenzung auftreten können. Zudem belastet diese Restbestromung des Elektromotors das Bordnetz des Fahrzeugs.

Außerdem treten bei einer Volllaststraffung hochdynamische Lastzustände auf. Diese führen zu hohen Drehmomenten (Haltemomenten) in der Abtriebsstufe des Gurtstraffers und somit zu hohen Verzahnungskräften, insbesondere bei einer Schrägverzahnung der verwendeten Verzahnungsbauteile auch zu hohen Axialkräften, die eine Verformung der Verzahnungsbauteile, wie Radkörper und der Lagerstellen im Gehäuse des Gurtstraffers bewirken und daher zu einem Verlust der Tragfähigkeit, letztendlich zu einer Beschädigung und einem mechanischen Ausfall der Verzahnungsbauteile führen kann.

Die Aufgabe der Erfindung ist es, einen Gurtstrafferantrieb der eingangs genannten Art bereitzustellen, bei dem hohe passive Lastfälle, die höher sind als die aktive Strafflast des Gurtstraffers abgefangen werden, ohne dass die Gefahr einer Beschädigung oder einem Ausfall der Verzahnungsbauteile besteht und dabei die Tragfähigkeit zumindest nicht reduziert wird. Ferner soll bei einer Auslösung des Gurtstraffers ein schnelles Straffen ermöglicht werden.

Diese Aufgabe wird gelöst durch einen Gurtstrafferantrieb mit den Merkmalen des Patentanspruchs 1.

Ein solcher Gurtstrafferantrieb zum Straffen eines um eine Wickelwelle aufwickelbaren Sicherheitsgurtes, welcher eine von einer Antriebseinheit angetriebene Spindelwelle und ein Schneckengetriebe mit einer auf der Spindelwelle drehmomentfest gelagerten Schnecke und einem mit derselben kämmenden, auf der Wickelwelle drehfest gelagerten Abtriebsrad, zeichnet sich erfindungsgemäß dadurch aus, dass
- die Schnecke einen ersten Verzahnungsabschnitt mit einer ersten Verzahnungsgeometrie aufweist, wobei in der ersten Stellung der Schnecke der erste Verzahnungsabschnitt mit dem Abtriebsrad kämmt,
- die Schnecke wenigstens einen an den ersten Verzahnungsabschnitt sich anschließenden zweiten Verzahnungsabschnitt mit einer zweiten Verzahnungsgeometrie aufweist, wobei die erste und zweite Verzahnungsgeometrie unterschiedlich ausgebildet sind, und
- in Abhängigkeit eines axialen Krafteintrages in die Schnecke eine axiale Verschiebung der Schnecke zwischen einer ersten Stellung, in welcher die Schnecke über den ersten Verzahnungsabschnitt mit dem Abtriebsrad kämmt, und einer mit dem Abtriebsrad über deren zweiten Verzahnungsabschnitt kämmenden Stellung bewirkt wird.

Mit einer erfindungsgemäßen Ausgestaltung der Schnecke wird in Abhängigkeit des eines axialen Krafteintrages in die Schnecke derjenige Verzahnungsabschnitt mit der zugehörigen Verzahnungsgeometrie durch axiales Verschieben der drehfesten Schnecke in Eingriff mit dem Abtriebsrad gebracht, bei welchem die Verzahnungsgeometrie so ausgebildet werden kann, dass der gewünschte Wirkungsgrad des Schneckengetriebes erreicht wird, also bei einer geringen Last sich ein großer Wirkungsgrad und bei großer Last am Abtriebsrad sich ein kleiner Wirkungsgrad einstellt.

So kann in der ersten Stellung als Nominallage der Schnecke die erste Verzahnungsgeometrie derart gewählt werden, dass eine schnelle Drehübertragung zur schnellen Gurtlosebeseitigung mit geringer Drehmomentübertragung erreicht wird und anschließend bei steigender Last am Abtriebsrad durch axiales Verschieben der Schnecke die zweite Verzahnungsgeometrie in Eingriff mit dem Abtriebsrad kommt, die so gewählt ist, dass in dieser Stellung der Schnecke ein mit einer hohen Drehmomentübertragung verbundener niedriger Wirkungsgrad sich einstellen kann. Damit wird seitens des Abtriebsrades eine hohe Ankopplungskraft erzielt, so dass Überlasten durch dieses axiale Ausweichen der Schnecke abgebaut werden. Die Tragfähigkeit des Gurtstrafferantriebes wird dadurch wesentlich verbessert, wobei gleichzeitig die Getriebbaufestigkeit des Schneckengetriebes auf die "normalen" Insassenvorverlagerungslasten ausgelegt werden kann.

Dabei kann die zu einem geringen Wirkungsgrad führende zweite Verzahnungsgeometrie der Schnecke so ausgebildet werden, dass der geringe Wirkungsgrad zu einer Selbsthemmung des Schneckengetriebes führt und somit eine am Abtriebsrad wirkende große Last ohne eine Gegenbestromung des als Elektromotor ausgebildeten Antriebseinheit gehalten wird.

Besonders vorteilhaft ist es gemäß einer Ausgestaltung der Erfindung, wenn die Schnecke verschiebbar zwischen der ersten Stellung und der zweiten Stellung auf der Spindelwelle angeordnet ist. Damit lässt sich ein konstruktiv einfacher Aufbau des Gurtstraffers erreichen.

In einer weiteren Ausgestaltung der Erfindung ist ein Federelement vorgesehen, welches die Schnecke in Richtung der ersten Stellung vorspannt wird. Damit ist ein Krafteintrag zum Verschieben der Schnecke nur in Richtung der zweiten Stellung erforderlich, da die Schnecke automatisch aus der zweiten Stellung durch die Federkraft des Federelementes in die erste Stellung zurückverschoben werden kann.

In vorteilhafter Weise ist nach einer weiteren Ausgestaltung der Erfindung zur Erzeugung des axialen Krafteintrages in die Schnecke ein Aktuator vorgesehen, durch den die Verschiebung zwischen der ersten Stellung und der zweiten Stellung bewirkt wird. Im Falle einer durch ein Federelement in Richtung der ersten Stellung vorgespannten Schnecke wird von diesem Aktuator lediglich die Verschiebung aus der ersten Stellung in die zweite Stellung bewirkt, da in umgekehrter Richtung die Schnecke von der Federkraft des Federelementes zurück in die erste Stellung verschoben wird.

Ein solcher Aktor ist vorzugsweise als Motoreinheit mit einem Zahnrad ausgebildet, wobei die Schnecke eine mit dem Zahnrad in Wirkverbindung stehende Zahnstangenkontur aufweist. Dadurch kann die Schnecke frei rotieren, kann aber trotzdem über das in die Zahnstangenkontur der Schnecke eingreifende Zahnrad axial verstellt werden.

Alternativ anstelle der Motoreinheit ist ein Magnetsystem mit einer zwischen zwei Schaltstellungen verschwenkbaren Schaltwippe vorgesehen, wobei bei aktiviertem Magnetsystem die Schaltwippe in Wirkverbindung mit der Schnecke steht. Damit wird bei bestromten Magnetsystem die Schaltwippe in eine die Schnecke verschiebende Schaltstellung geschaltet. Im Falle einer durch ein Federelement in Richtung der ersten Stellung vorgespannten Schnecke wird von diesem Magnetsystem über die Schaltwippe lediglich die Verschiebung aus der ersten Stellung in die zweite Stellung bewirkt, da in umgekehrter Richtung die Schnecke von der Federkraft des Federelementes zurück in die erste Stellung verschoben wird.

In einer weiteren Ausgestaltung der Erfindung wird der axiale Krafteintrag in die Schnecke durch eine an dem Abtriebsrad wirkende Last erzeugt, wobei in Abhängigkeit dieser an dem Abtriebsrad wirkenden Last eine axiale Verschiebung der Schnecke aus der ersten Stellung gegen die Federkraft des Federelementes in die zweite Stellung bewirkt wird.

Mit dieser Ausgestaltung der Erfindung wird die Schnecke automatisch in Abhängigkeit des von der Last am Abtriebsrad bzw. Schneckenrad bestimmten Betriebszustandes des Gurtstrafferantriebes derjenige Verzahnungsabschnitt mit der zugehörigen Verzahnungsgeometrie durch axiales Verschieben der drehfesten Schnecke in Eingriff mit dem Abtriebsrad gebracht, bei welchem die Verzahnungsgeometrie so ausgebildet werden kann, dass der gewünschte Wirkungsgrad des Schneckengetriebes erreicht wird, also bei Eingriff mit der ersten Verzahnungsgeometrie eine hohe Drehzahl und damit ein schnelles Straffen des Sicherheitsgurtes erreicht wird.

In einer weiteren vorteilhaften Ausgestaltung der Erfindung ist die Schnecke mit einer ersten und zweiten Verzahnungsgeometrie ausgebildet, bei welchen die Steigungen unterschiedliche Werte aufweisen. Vorzugsweise weist die zweite Verzahnungsgeometrie eine kleinere Steigung auf als die erste Verzahnungsgeometrie.

Damit führt in der ersten Stellung der Schnecke bei niedriger Last ein Eingriff der ersten Verzahnungsgeometrie mit dem Abtriebsrad zu einer kleineren Übersetzung als in der durch eine zunehmende Last veranlasste axial verschobene Position der Schnecke, in der die zweite Verzahnungsgeometrie mit dem Abtriebsrad in Eingriff steht. Dies bedeutet in der ersten Stellung der Schnecke eine abtriebsseitige höhere Drehzahl im Vergleich zur Drehzahl in der verschobenen Position. Damit wird eine lastabhängige Änderung der Übersetzung mit entsprechender Änderung des Wirkungsgrades erreicht.

Besonders vorteilhaft ist es, wenn dabei weiterbildungsgemäß die Schnecke mit einer ersten und zweiten Verzahnungsgeometrie ausgebildet ist, bei welchen der Wert der Steigung der zweiten Verzahnungsgeometrie ein ganzzahliger Teiler, vorzugsweise 1/2 des Wertes der Steigung der ersten Verzahnungsgeometrie beträgt. Mit dem Wert 1/2 ist damit die Übersetzung bei Eingriff der ersten Verzahnungsgeometrie der Schnecke mit dem Abtriebsrad doppelt so groß wie bei dem Eingriff der zweiten Verzahnungsgeometrie mit dem Abtriebsrad.

Desweiteren ist es möglich, die Steigung der zweiten Verzahnungsgeometrie über den zweiten Verzahnungsabschnitt kontinuierlich zu erniedrigen, so dass mit zunehmender axialer Verschiebung der Schnecke in diesen zweiten Verzahnungsabschnitt eine Selbsthemmung des Schneckengetriebes erreicht wird.

In einer weiteren Ausgestaltung der Erfindung ist die Schnecke mit einer ersten und zweiten Verzahnungsgeometrie ausgebildet, wobei ein kontinuierlicher Übergang zwischen der ersten und zweiten Verzahnungsgeometrie vorgesehen ist. Dadurch sollen Eingriffsstörungen der Verzahnungen im Übergangsbereich zwischen der ersten und zweiten Verzahnung reduziert werden.

Zur Realisierung von unterschiedlichen Verzahnungsgeometrien wird gemäß einer weiteren vorteilhaften Ausgestaltung der Erfindung vorgeschlagen, dass die Schnecke mit einer ersten und zweiten Verzahnungsgeometrie ausgebildet ist, bei welchen die zweite Verzahnungsgeometrie mit einer größeren Zahnstärke als die erste Verzahnungsgeometrie ausgebildet ist. Damit wird bei zunehmender Last an dem Abtriebsrad eine klemmende Wirkverbindung zwischen dem Abtriebsrad und der Schnecke erzeugt und somit das von dem Abtriebsrad einbringbare Drehmoment erhöht.

In einer weiteren Ausgestaltung der Erfindung ist die Schnecke mit einer ersten und zweiten Verzahnungsgeometrie ausgebildet, bei welchen die zweite Verzahnungsgeometrie mit einer der Zahnstärke der ersten Verzahnungsgeometrie entsprechenden Zahnstärke beginnend kontinuierlich zunimmt. Damit nimmt aufgrund der zunehmenden Zahnbreite mit zunehmender Last am Abtriebsrad auch die damit verbundene Verklemmung zwischen den beteiligten Verzahnungen zu, so dass auch das aufzunehmende Drehmoment zunimmt. Dies kann auch zu einer Selbsthemmung des Schneckengetriebes führen.

Ferner ist nach einer weiteren Ausgestaltung der Erfindung die Verzahnungsgeometrie des Abtriebsrades ballig ausgebildet. Damit werden Eingriffsstörungen aufgrund der sich ändernden Verzahnungsgeometrie der Schnecke minimiert, insbesondere bei sich ändernden Steigungswinkeln.

Schließlich ist gemäß einer letzten bevorzugten Ausgestaltung der Erfindung die Schnecke mit einem auf der Spindelwelle verschiebbar angeordneten, den ersten und zweiten Verzahnungsabschnitt aufweisenden Schneckenelement und einem drehfest mit der Spindelwelle verbundenen Antriebselement ausgebildet, wobei das Schneckenelement mit dem Antriebselement drehgekoppelt ist und zwischen dem Schneckenelement und dem Antriebselement das Federelement angeordnet ist. Dies führt zusammen mit der Spindelwelle zu einem einfachen konstruktiven Aufbau der Schnecke.

Die Erfindung wird nachfolgend anhand von Ausführungsbeispielen unter Bezugnahme auf die beigefügten Figuren ausführlich beschrieben. Es zeigen:
- Figur 1: eine schematische perspektivische Darstellung eines Gurtstrafferantriebes mit einem von einem Elektromotor angetriebenen Schneckengetriebe gemäß der Erfindung,
- Figur 2: eine schematische Darstellung des Schneckengetriebes des Gurtstrafferantriebes gemäß Figur 1 in einer ersten Eingriffsstellung der Schnecke mit dem Abtriebsrad gemäß einem ersten Ausführungsbeispiel,
- Figur 3: eine Detaildarstellung des Eingriffsbereichs zwischen Schnecke und Abtriebsrad gemäß Figur 2,
- Figur 4: eine schematische Darstellung des Schneckengetriebes des Gurtstrafferantriebes gemäß Figur 2 in einer zweiten Eingriffsstellung der Schnecke mit dem Abtriebsrad,
- Figur 5: eine schematische Darstellung des Schneckengetriebes des Gurtstrafferantriebes gemäß Figur 4 in einer zweiten Eingriffsstellung der Schnecke mit dem Abtriebsrad,
- Figur 6: eine schematische Darstellung des Schneckengetriebes des Gurtstrafferantriebes gemäß Figur 1 in einer ersten Eingriffsstellung der Schnecke mit dem Abtriebsrad gemäß einem zweiten Ausführungsbeispiel,
- Figur 7: eine schematische Darstellung des Schneckengetriebes des Gurtstrafferantriebes gemäß Figur 6 in einer zweiten Eingriffsstellung der Schnecke mit dem Abtriebsrad,
- Figur 8: eine perspektivische Schnittdarstellung einer auf einer Spindelwelle angeordneten Schnecke in ihrer ersten Stellung I gemäß des Gurtstrafferantriebes nach Figur 1,
- Figur 9: eine schematische Darstellung der auf einer Spindelwelle angeordneten Schnecke gemäß Figur 8 in einer aus der Stellung I axial verschobenen Stellung,
- Figur 10: eine schematische Darstellung des Schneckengetriebes des Gurtstrafferantriebes nach Figur 4 in einer ersten Eingriffsstellung der Schnecke mit dem Abtriebsrad mit einem Aktuator in einer ersten Ausführung zum Verschieben der Schnecke, und
- Figur 11: eine schematische Darstellung des Schneckengetriebes des Gurtstrafferantriebes nach Figur 10 mit einem Aktor in einer alternativen Ausführung zum Verschieben der Schnecke.

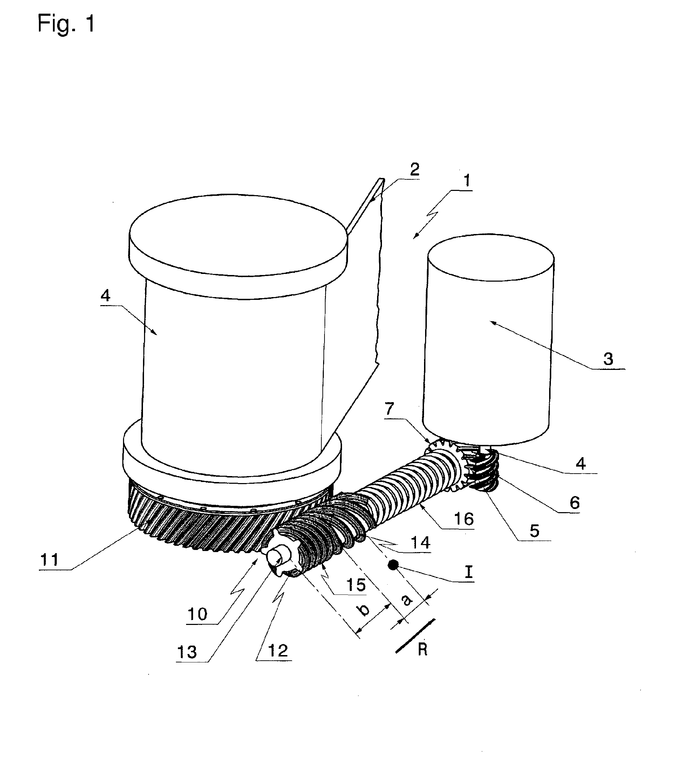

Der Gurtstrafferantrieb 1 gemäß Figur 1 ist nur mit seinen für das Verständnis der Erfindung wesentlichsten Teilen dargestellt und umfasst einen Elektromotor 3 als Antriebseinheit, dessen Motorwelle 4 über ein Getriebe 5 mit einer Spindelwelle 13 eines Schneckengetriebes 10 gekoppelt ist, um eine Wickelwelle 4 zum Straffen, also zum Aufwickeln eines Sicherheitsgurtes 2 anzutreiben. Das Getriebe 5 ist als Schneckengetriebe mit einer auf der Motorwelle 4 des Elektromotors 3 drehfest angeordneter Schnecke 6 und einem zugehörigen, auf der Spindelwelle 13 des Schneckengetriebes 10 fest montierten Schneckenrad 7 ausgebildet. Ein Gehäuse des Gurtstrafferantriebes 1 ist in Figur 1 nicht dargestellt.

Das erfindungsgemäße Schneckengetriebe 10 umfasst eine auf der Spindelwelle 13 in Richtung R gegen die Federkraft eines Federelementes 16 verschiebbar angeordnete Schnecke 12 sowie ein mit dieser kämmenden Abtriebsrad 11, welches eine Außenschrägverzahnung aufweist. Dieses Abtriebsrad 11 ist mit der Wickelwelle 1 über eine Kupplung (nicht dargestellt) verbunden. Das Federelement 16 ist ebenso auf der Spindelwelle 13 angeordnet.

Die Schnecke 12 weist zwei aneinandergereihte Verzahnungsabschnitte a und b mit unterschiedlichen Verzahnungsgeometrien auf, einem ersten Verzahnungsabschnitt a mit einer ersten Verzahnungsgeometrie 14 und einem zweiten Verzahnungsabschnitts b mit einer zweiten Verzahnungsgeometrie 15.

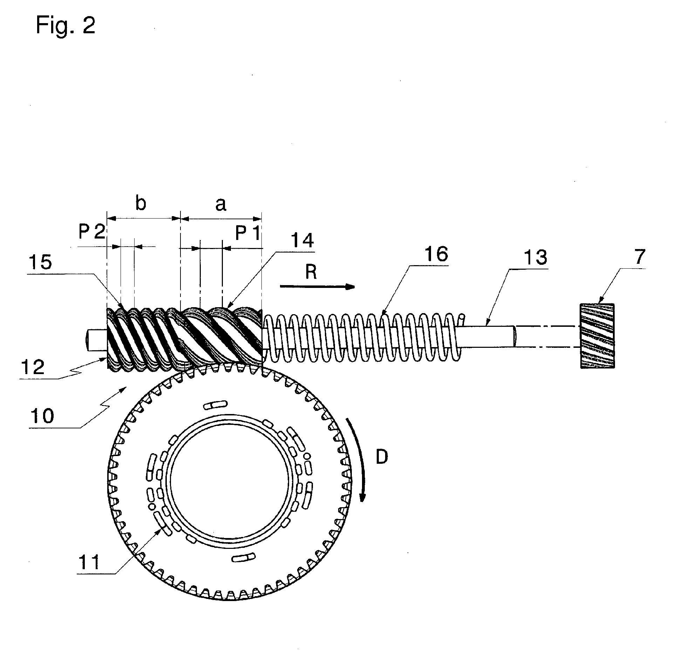

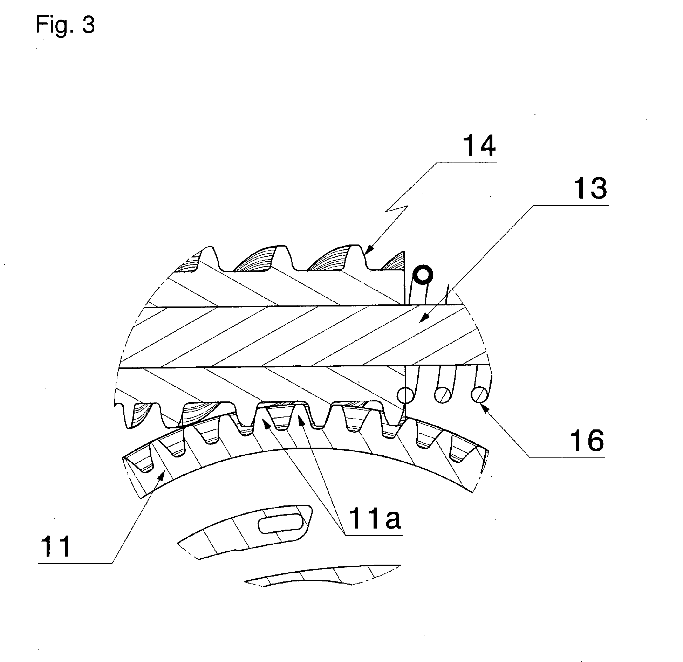

Gemäß Figur 1 steht das Abtriebsrad 11 in Eingriff mit der ersten Verzahnungsgeometrie 14 und bildet damit eine erste Stellung I der Schnecke 12. Diese erste Stellung I der Schnecke 12 auf der Spindel 13 zeigt in einer Seitenansicht die Figur 2 sowie in einer Detailansicht des Eingriffsbereichs zwischen der ersten Verzahnungsgeometrie 14 und der Verzahnung des Abtriebsrades 11 die Figur 3.

Die beiden Verzahnungsabschnitte a und b weisen unterschiedliche Verzahnungsgeometrien 14 und 15 auf, die sich in deren jeweiligen Steigung P unterscheiden. So ist die Steigung P₁ der ersten Verzahnungsgeometrie 14 ersten Verzahnungsabschnittes a doppelt so groß wie die Steigung P₂ der zweiten Verzahnungsgeometrie 15 des zweiten Verzahnungsabschnittes b der Schnecke 12. Es gilt also P₂ = (½) P₂.

In dieser Stellung I der Schnecke 12 findet der Eingriff der ersten Verzahnungsgeometrie 14 mit der Verzahnung des Ȧbtriebsrades 11 bei niedriger Last statt. Diese Stellung I der Schnecke 12 stellt deren Nominallage dar, in der durch entsprechenden Antrieb des Elektromotors 3 eine schnelle Gurtlosereduzierung des Sicherheitsgurtes 2 mittels einer schnellen Drehübertragung erfolgt.

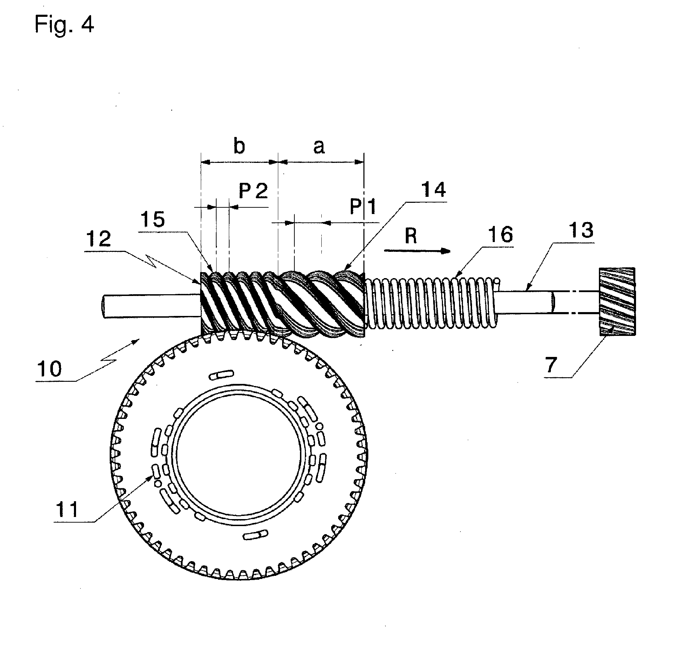

Aufgrund einer am Ende des Vorganges einer Gurtlosereduzierung zunehmenden Last wird das Abtriebsrad 11 mit einer Kraft in Richtung des Richtungspfeiles D beaufschlagt, so dass dadurch eine Verschiebung der Schnecke 12 entgegen der Federkraft des Federelementes 16 in Richtung R bewirkt wird. Durch diese axiale Verschiebung der Schnecke 12 auf der Spindelwelle 13 kommt nun die zweite Verzahnungsgeometrie 15 des zweiten Verzahnungsabschnittes b in Eingriff mit der Verzahnung des Abtriebsrades 11, wie dies in Figur 4 dargestellt ist.

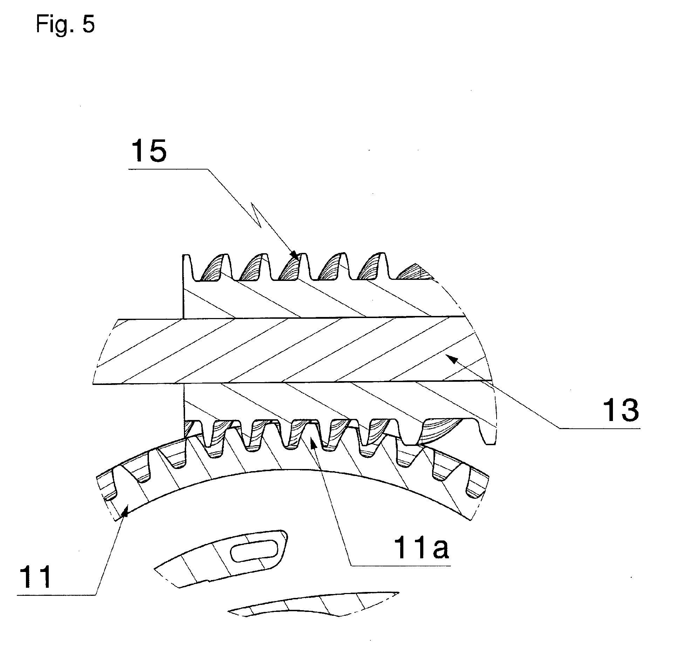

Dadurch dass die zweite Verzahnungsgeometrie 15 aufgrund der gegenüber der ersten Verzahnungsgeometrie 14 halbierten Steigung die einzelnen Zähne 11a der Verzahnung des Abtriebsrades 11 in jeden Zahn der zweiten Verzahnungsgeometrie 15 eingreifen (vgl. Figur 5) und in der Stellung I der Schnecke 12 jeweils zwei Zähne 11a der Verzahnung des Abtriebsrades 11 in einen Zahn der ersten Verzahnungsgeometrie 14 eingreifen (vgl. Figur 3), ist die Übersetzung in der Stellung der Schnecke 12 gemäß Figur 4 kleiner als in der Stellung I der Schnecke 12 gemäß Figur 2. Somit erfolgt in der Stellung der Schnecke 12 gemäß Figur 4 ein Eingriff der zweiten Verzahnungsgeometrie 15 unter hoher Last mit einer großen Übersetzung.

Mit der großen Übersetzung ist im Vergleich zu der Stellung I ein kleiner Wirkungsgrad verbunden, wodurch eine hohe Drehmomentübertragung seitens des Abtriebsrades 11 erreicht wird, während in der Stellung I nur ein geringes Drehmoment übertragbar ist. Mit dieser Auslegung der beiden Verzahnungsgeometrien 14 und 15 wird ein lastabhängiges Übersetzungsverhältnis eingestellt, insbesondere ist dadurch eine dynamische Anpassung der Übersetzung von einer schnellen Drehübertragung mit einem geringen Drehmoment zu einem hohen Drehmoment bei großer Last an dem Abtriebsrad 11 möglich. Ferner werden Überlasten an dem Abtriebsrad 11 durch das axiale Verschieben bzw. Ausweichen der Schnecke 12 aufgefangen, so dass das Schneckengetriebe 10 mit einer auf eine "normale" Insassenvorverlagerungslast ausgelegte Getriebebaufestigkeit hergestellt werden kann.

Es ist auch möglich die zweite Verzahnungsgeometrie 15 so auszubilden, dass deren Steigungswinkel α₂ kontinuierlich beginnend am Übergangsbereich zum ersten Verzahnungsabschnittes a mit dem Wert des Steigungswinkels α₁ kontinuierlich bis auf einen Endwert ansteigt. Dieser Endwert kann derart gewählt werden, dass bei einem durch eine entsprechende lastabhängige Verschiebung der Schnecke 12 bewirkten Eingriff des zweiten Verzahnungsabschnittes 15 mit diesem Endwert des Steigungswinkels mit dem Abtriebsrad 11 eine Selbsthemmung des Schneckengetriebes 10 erreicht wird. Damit kann die diese Verschiebung bewirkte Last an dem Abtriebsrad 11 ohne eine Gegenbestromung des Elektromotors 3 gehalten werden. Dies kann für eine dauerhafte Verriegelung genutzt werden.

Die axiale Verschiebebewegung der Schnecke 12 wird durch die Feder-Kennlinie des Federelementes 16 bestimmt. Damit kann ein solches Federelement 16 sowie die beiden Verzahnungsgeometrien 14 und 15 aufeinander abgestimmt werden.

Die Verzahnung des Abtriebsrades 11 kann ballig ausgeführt werden, um Eingriffsstörungen aufgrund des sich ändernden Steigungswinkels der zweiten Verzahnungsgeometrie 15 gegenüber der ersten Verzahnungsgeometrie 14 zu minimieren.

Eingriffsstörungen zwischen der Verzahnung des Abtriebsrades 11 und der ersten und zweiten Verzahnungsgeometrie 14 und 15 aufgrund unterschiedlicher Verzahnungsgeometrien, insbesondere auch in den Übergangsbereichen können bewusst zugelassen werden, um hierdurch eine gewünschte Reduzierung des Wirkungsgrades zu erhalten, die zu höheren abtriebsseitigen Haltekräften führt.

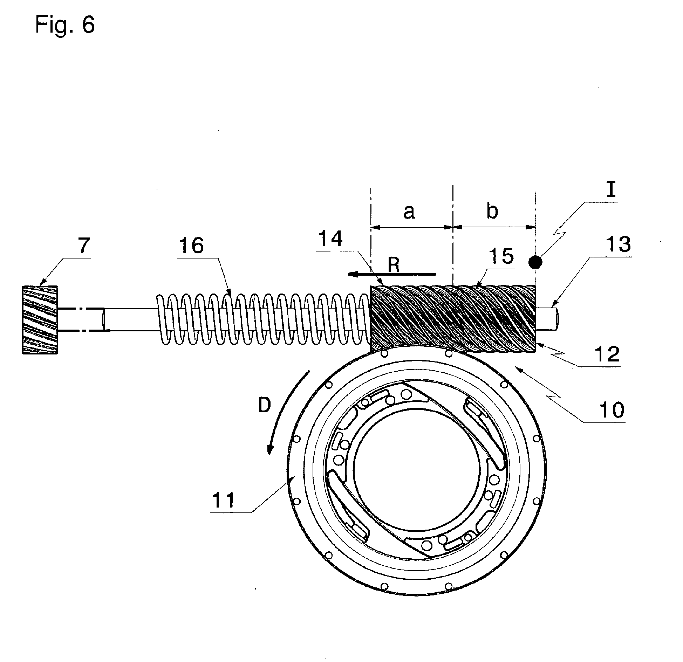

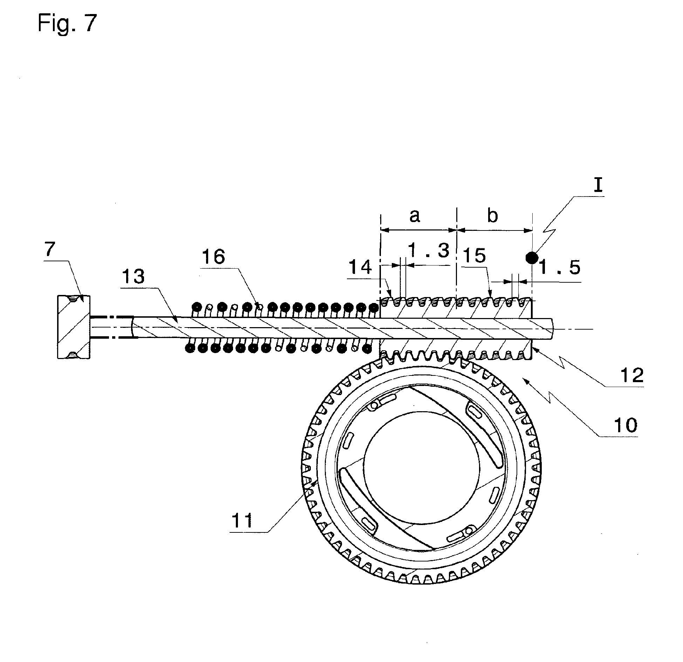

Die Figuren 6 und 7 zeigen ein Schneckengetriebe 10 mit ebenso einem ersten Verzahnungsabschnitt a und einem zweiten Verzahnungsabschnitt b mit unterschiedlichen Verzahnungsgeometrien 14 und 15. Die erste Verzahnungsgeometrie 14 kann der Verzahnungsgeometrie 14 gemäß den Figuren 2 und 4 entsprechen, wobei jedoch die zweite Verzahnungsgeometrie 15 mit Zähnen ausgebildet ist, deren Zahnbreite größer ist als die Zahnbreite der Zähne der ersten Verzahnungsgeometrie 14. Dabei nimmt diese Zahnbreite ausgehend von der Zahnbreite der ersten Verzahnungsgeometrie 14 am Übergang zwischen den beiden Verzahnungsgeometrien 14 und 15 kontinuierlich auf einen Endwert zu. So zeigt beispielsweise Figur 7 einen ersten Verzahnungsbereich 14, dessen Zähne eine Zahnbreite von 1,3 mm aufweisen und einem zweiten Verzahnungsbereich 15, der ausgehend von dieser Zahnbreite von 1,3 mm bis auf einen Endwert von 1,5 mm ansteigt.

Die Figuren 6 und 7 zeigen die auf der Spindelwelle 13 angeordnete Schnecke 12 in deren Stellung I, in der wie oben bereits beschrieben die erste Verzahnungsgeometrie 14 zur Erzielung einer schnellen Gurtlosereduzierung derart ausgebildet ist, dass eine niedrige Übersetzung des Schneckengetriebes 10 erreicht wird.

Eine abtriebsseitige Last bewirkt eine in Richtung D wirkende Kraft am Abtriebsrad 11, wodurch die Schnecke 12 auf der Spindelwelle 13 entgegen der Federkraft des Federelementes 16 in Richtung R axial verschoben wird. Damit kommt der die breiteren Zähne aufweisende zweite Verzahnungsabschnitt 15 mit der Verzahnung des Abtriebsrades 11 in Eingriff. Infolgedessen wird bei zunehmender Last an dem Abtriebsrad 11 eine klemmende Wirkverbindung zwischen dem Abtriebsrad 11 und der Schnecke 12 erzeugt und somit das von dem Abtriebsrad 11 einbringbare Drehmoment erhöht. Bei entsprechend gewählter Zahnbreite der zweiten Verzahnungsgeometrie 15 kann auch eine Selbsthemmung des Schneckengetriebes 10 bewirkt werden.

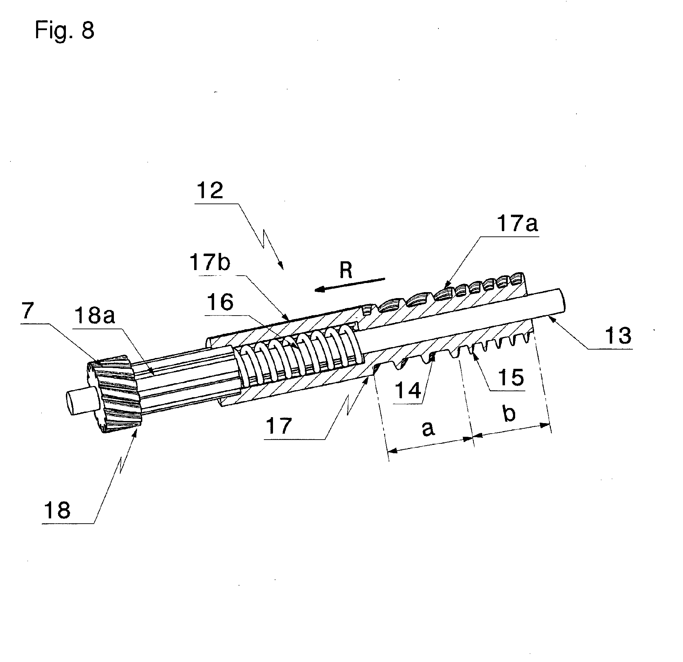

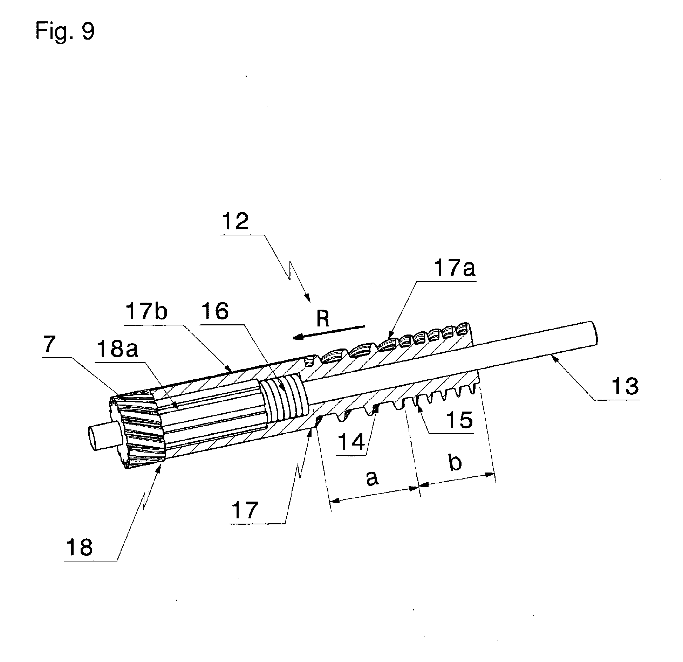

Die Figuren 8 und 9 zeigen einen Aufbau einer auf einer Spindelwelle 13 angeordneten Schnecke 12. Gemäß Figur 8 befindet sich die Schnecke 12 in der Stellung I, in der der erste Verzahnungsabschnittes a mit dem Abtriebsrad 11 kämmt, wogegen in der Stellung der Schnecke 12 gemäß Figur 9 diese in Richtung R gegen die Federkraft des Federelementes 16 auf der Spindelwelle 13 axial verschoben ist.

Die in den beiden Figuren 8 und 9 dargestellte Schnecke 12 umfasst ein Schneckenelement 17, welches die beiden Verzahnungsabschnitt a und b mit der ersten und zweiten Verzahnungsgeometrie 14 und 15 trägt sowie ein Antriebselement 18, welches drehfest auf der Spindelwelle 13 angeordnet ist und das Schneckenrad 7 des Getriebes 5 aufweist.

Das Schneckenelement 17 besteht aus einem die beiden Verzahnungsabschnittes a und b aufweisenden ersten Teil 17a und einem sich daran anschließenden rohrförmigen zweiten Teil 17b, der teleskopartig ein zylindrisches Teil 18a des Antriebselementes 18 aufnimmt. Dabei ist dieser rohrförmige zweite Teil 17b drehfest mit diesem zylindrischen Teil 18a beispielsweise über einen auf diesem zylindrischen Teil 18a in axialer Richtung angeordneten Steg verbunden, der in eine an deren Kontur angepasste und in axialer Richtung verlaufende Nut eingreift.

Es ist auch möglich, die Drehmomentkopplung des zweiten Teils 17b mit dem zylindrischen Teil 18a nicht über axial verlaufende Stege und zugehörige Nuten herzustellen, so dass eine rein axiale Verschiebung erfolgt, sondern über schraubenlinienförmig verlaufende Stege und Nuten zu realisieren. Auf diese Weise kann im Moment der Axialverschiebung eine momentan wirkende Übersetzungsänderung durch ein Verschrauben beim axialen Verschieben erreicht werden.

Im Inneren des rohrförmigen zweiten Teils 17b ist auf der Spindelwelle 13 das Federelement 16 angeordnet, welches sich gegen das zylindrische Teil 18a des Antriebselementes 18 abstützt.

Wie oben beschrieben wird bei zunehmender Last an dem Abtriebsrad 11 das Schneckenelement 17 gegen die Federkraft des Federelementes 16 in Richtung des Antriebselementes 18 auf der Spindelwelle 13 axial verschoben, also in Richtung R. Die nach der Verschiebung erreichte Stellung des Schneckenelementes 17 ist in Figur 9 dargestellt und entspricht beispielsweise der Stellung der Schnecke 12 nach Figur 4.

Gemäß den oben dargestellten beschriebenen Ausführungsbeispielen wird für das Federelement 16 eine spiralförmige Druckfeder verwendet. Für die Schnecke 12 können natürlich auch andere Federelemente, wie beispielsweise spiralförmige Federelemente mit Zugwirkung oder auch Tellerfedern eingesetzt werden.

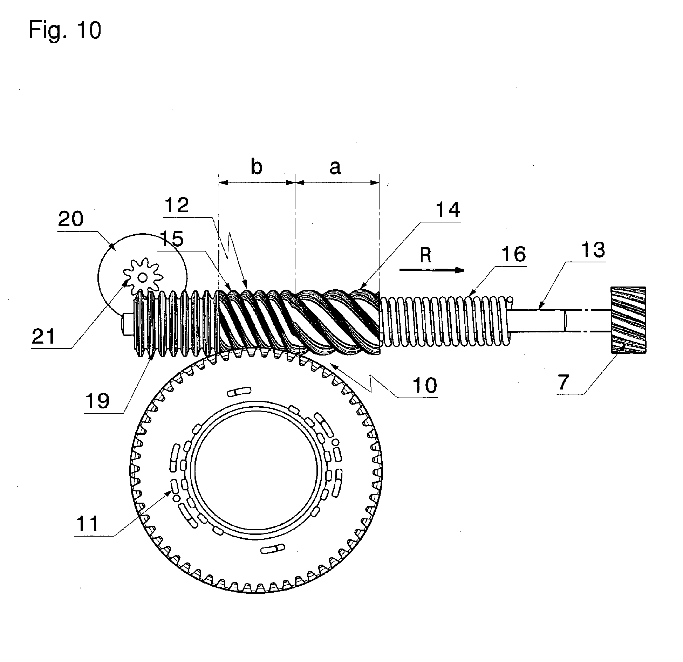

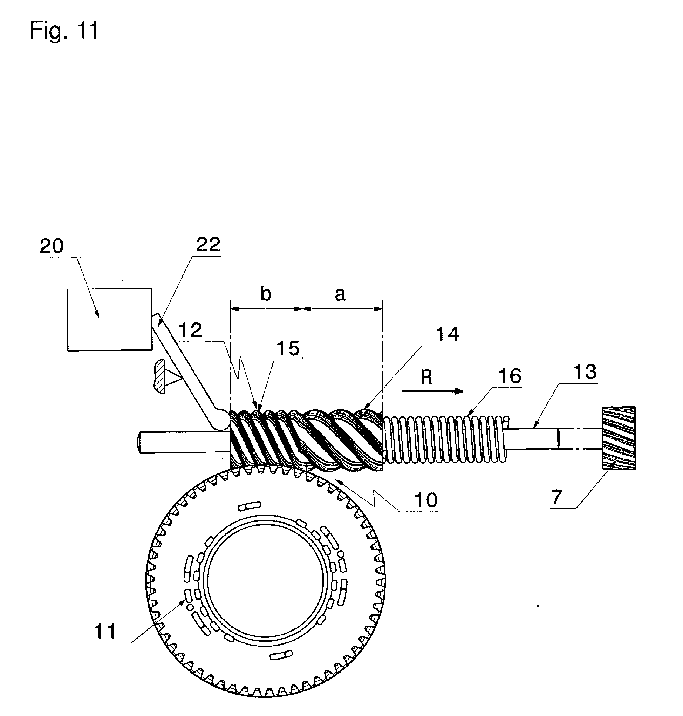

In den oben beschriebenen Ausführungsbeispielen erfolgt die Verschiebung der Schnecke 12 in Abhängigkeit der abtriebsseitigen Last. In den Figuren 10 und 11 wird eine Möglichkeit beschrieben, die Verschiebung der Schnecke 12 unabhängig von der Last am Abtriebsrad 11 gezielt zu steuern, als zwischen einem Schaltzustand, bei dem die Schnecke 12 in der ersten Stellung I in Eingriff mit der ersten Verzahnungsgeometrie a steht und einem Schaltzustand, bei dem die Schnecke 12 in der zweiten Stellung II in Eingriff mit der zweiten Verzahnungsgeometrie b steht.

Hierzu ist in diesen Figuren 10 und 11 ein Aktuator 20 vorgesehen, mit welchem ein Verschieben der Schnecke 12 aus der ersten Stellung I in die zweite Stellung II bewirkt wird, aus der die Schnecke 12 wieder unabhängig von dem Aktuator 20 von dem Federelement 16 in die erste Stellung I zurückgeschoben wird.

Die Ausführung des Schneckengetriebes 10 in diesen Figuren 10 und 11 entspricht derjenigen nach Figur 4.

Nach Figur 10 ist als Aktor 20 eine Motoeinheit, bspw. ein Elektromotor vorgesehen, welcher über ein als Stirnrad ausgebildetes Zahnrad 21 in eine endseitig der Schnecke 12 angeordnete Zahnstangenkontur 19 eingreift. Diese Zahnstangenkontur 19 ist als umlaufende Rillen ausgebildet, so dass die Schnecke 12 frei rotieren kann, jedoch bei von der Motoreinheit 20 in bestromten Zustand angetriebenen Zahnrad 21 aus der ersten Stellung I in die zweite Stellung II axial auf der Spindelwelle 13 gegen die Federkraft des Federelementes 16 verschoben wird, wie dies in Figur 10 dargestellt ist. Bei nichtbestromter Motoreinheit 20 wird die Schnecke 12 von der Federkraft des Federelementes 16 wieder in die erste Stellung gedrückt.

Der Aktuator 20 des Schneckengetriebes 10 nach Figur 11 ist als Magnetsystem mit einer zwischen zwei Schaltstellungen verschwenkbaren Schaltwippe 22 ausgebildet. Bei aktiviertem Magnetsystem 20 wird die Schaltwippe 22 in eine erste Stellung verschwenkt, wodurch die Schnecke 12 von dieser Schaltwippe 22 in die zweite Stellung II gegen die Federkraft des Federelementes 16 gedrückt wird, wie dies in Figur 11 dargestellt ist. Bei nicht aktiviertem Magnetsystem 20 fällt die Schaltwippe 22 in eine zweite Schaltstellung zurück, so dass aufgrund der Federkraft des Federelementes 16 die Schnecke 12 wieder in ihre erste Stellung I zurückdrückt.

Das Verschieben der Schnecke mittels eines Aktuators 20 kann auch mit bei dem Schneckengetriebe 10 in der Ausführung gemäß den Figuren 6 und 7 durchgeführt werden.

Ferner ist es auch möglich, die Aktuatoren 20 gemäß den Figuren 10 und 11 derart auszubilden, dass auf das Federelement 16 verzichtet werden kann und das Verschieben der Schnecke 12 zwischen den beiden Stellung I und II in beide Richtung ausschließlich von dem Aktuator 20 übernommen wird.

Schließlich das Schneckengetriebe 10 auch derart gestaltet werden, dass die Schnecke 12 drehfest mit der Spindelwelle 13 verbunden ist, also nur zusammen mit dieser Spindelwelle 13 verschoben werden kann. In diesem Falle ist natürlich ein nicht mit der Spindelwelle 13 verbundener Anschlag für das Federelement 13 erforderlich.

### Bezugszeichenliste

- 1: Gurtstrafferantrieb
- 2: Sicherheitsgurt
- 3: Antriebseinheit, Elektromotor
- 4: Motorwelle des Elektromotors 3
- 5: Getriebe
- 6: Schnecke des Getriebes 5
- 7: Schneckenrad des Getriebes 5

- 10: Schneckengetriebe
- 11: Abtriebsrad, Schneckenrad
- 12: Schnecke
- 13: Spindelwelle
- 14: erster Verzahnungsabschnitt der Schnecke 12
- 15: zweiter Verzahnungsabschnitt der Schnecke 12
- 16: Federelement, Druckfeder
- 17: Schneckenelement
- 18: Antriebselement
- 19: Zahnstangenkontur der Schnecke 12
- 20: Aktuator, Motoreinheit, Magnetsystem
- 21: Zahnrad
- 22: Schaltwippe

## Patentansprüche

1. Gurtstrafferantrieb (1) zum Straffen eines um eine Wickelwelle (4) aufwickelbaren Sicherheitsgurtes (2), umfassend
- eine von einer Antriebseinheit (3) angetriebene Spindelwelle (13), und
- ein Schneckengetriebe (10) mit einer auf der Spindelwelle (13) drehmomentfest gelagerten Schnecke (12) und einem mit derselben kämmenden, auf der Wickelwelle (4) drehfest gelagerten Abtriebsrad (11),
**dadurch gekennzeichnet**, dass
- die Schnecke (12) einen ersten Verzahnungsabschnitt (a) mit einer ersten Verzahnungsgeometrie (14) aufweist, wobei in der ersten Stellung (I) der Schnecke (12) der erste Verzahnungsabschnitt (a) mit dem Abtriebsrad (11) kämmt,
- die Schnecke (12) wenigstens einen an den ersten Verzahnungsabschnitt (a) sich anschließenden zweiten Verzahnungsabschnitt (b) mit einer zweiten Verzahnungsgeometrie (15) aufweist, wobei die erste und zweite Verzahnungsgeometrie (14, 15) unterschiedlich ausgebildet sind, und
- in Abhängigkeit eines axialen Krafteintrages in die Schnecke (12)eine axiale Verschiebung der Schnecke (12) zwischen einer ersten Stellung (I), in welcher die Schnecke (12) über den ersten Verzahnungsabschnitt (a) mit dem Abtriebsrad (11) kämmt, und einer mit dem Abtriebsrad (11) über deren zweiten Verzahnungsabschnitt (b) kämmenden zweiten Stellung (II) bewirkt wird.

2. Gurtstrafferantrieb (1) nach Anspruch 1,
**dadurch gekennzeichnet**, dass die Schnecke (12) verschiebbar zwischen der ersten Stellung (I) und der zweiten Stellung (II) auf der Spindelwelle (13) angeordnet ist.

3. Gurtstrafferantrieb (1) nach Anspruch 1 oder 2,
**dadurch gekennzeichnet**, dass ein Federelement (16) vorgesehen ist, welches die Schnecke (12) in Richtung der ersten Stellung (I) vorspannt.

4. Gurtstrafferantrieb (1) nach einem der vorhergehenden Ansprüche,
**dadurch gekennzeichnet**, dass zur Erzeugung des axialen Krafteintrages in die Schnecke (12) ein Aktuator (20) vorgesehen ist.

5. Gurtstrafferantrieb (1) nach Anspruch 4,
**dadurch gekennzeichnet**, dass der Aktuator (20) und das Federelement (16) derart ausgebildet sind, dass die Schnecke (12) in Abhängigkeit des von dem Aktuator (20) erzeugten axialen Krafteintrages gegen die Federkraft des Federelementes (16) aus der ersten Stellung (I) in die zweite Stellung (II) verschoben wird.

6. Gurtstrafferantrieb (1) nach Anspruch 4 oder 5,
**dadurch gekennzeichnet**, dass der Aktuator als Motoreinheit (20) mit einem Zahnrad (21) ausgebildet ist und die Schnecke (12) eine mit dem Zahnrad (21) in Wirkverbindung stehende Zahnstangenkontur (19) aufweist.

7. Gurtstrafferantrieb (1) nach Anspruch 4 oder 5,
**dadurch gekennzeichnet**, dass der Aktuator als Magnetsystem (20) mit einer zwischen zwei Schaltstellungen verschwenkbaren Schaltwippe (22) ausgebildet ist, wobei bei aktiviertem Magnetsystem (20) die Schaltwippe (22) in Wirkverbindung mit der Schnecke (12) steht.

8. Gurtstrafferantrieb (1) nach Anspruch 3,
**dadurch gekennzeichnet**, dass der axiale Krafteintrag in die Schnecke (12) durch eine an dem Abtriebsrad (11) wirkende Last erzeugt wird, wobei in Abhängigkeit dieser an dem Abtriebsrad (11) wirkenden Last eine axiale Verschiebung der Schnecke (12) aus der ersten Stellung (I) gegen die Federkraft des Federelementes (16) in die zweite Stellung (II) bewirkt wird.

9. Gurtstrafferantrieb (1) nach Anspruch 1,
**dadurch gekennzeichnet**, dass die Schnecke (12) mit einer ersten und zweiten Verzahnungsgeometrie (14, 15) ausgebildet ist, bei welchen die Steigungen (P₁, P₂) unterschiedliche Werte aufweisen.

10. Gurtstrafferantrieb (1) nach Anspruch 2,
**dadurch gekennzeichnet**, dass die zweite Verzahnungsgeometrie (15) eine kleinere Steigung (P₂) aufweist als die erste Verzahnungsgeometrie (14).

11. Gurtstrafferantrieb (1) nach Anspruch 2 oder 3,
**dadurch gekennzeichnet**, dass die Schnecke (12) mit einer ersten und zweiten Verzahnungsgeometrie (14, 15) ausgebildet ist, bei welchen der Wert der Steigung (P₂) der zweiten Verzahnungsgeometrie (15) ein ganzzahliger Teiler des Wertes der Steigung (P₁) der ersten Verzahnungsgeometrie (14) ist.

12. Gurtstrafferantrieb (1) nach einem der vorhergehenden Ansprüche,
**dadurch gekennzeichnet**, dass die Schnecke (12) mit einer ersten und zweiten Verzahnungsgeometrie (14, 15) ausgebildet ist, bei welcher ein kontinuierlicher Übergang zwischen der ersten und zweiten Verzahnungsgeometrie (14, 15) vorgesehen ist.

13. Gurtstrafferantrieb (1) nach Anspruch 1,
**dadurch gekennzeichnet**, dass die Schnecke (12) mit einer ersten und zweiten Verzahnungsgeometrie (14, 15) ausgebildet ist, bei welchen die zweite Verzahnungsgeometrie (15) mit einer größeren Zahnstärke als die erste Verzahnungsgeometrie (14) ausgebildet ist.

14. Gurtstrafferantrieb (1) nach Anspruch 6,
**dadurch gekennzeichnet**, dass die Schnecke (12) mit einer ersten und zweiten Verzahnungsgeometrie (14, 15) ausgebildet ist, bei welchen die zweite Verzahnungsgeometrie (15) mit einer der Zahnstärke der ersten Verzahnungsgeometrie (14) entsprechenden Zahnstärke beginnend kontinuierlich zunimmt.

15. Gurtstrafferantrieb (1) nach einem der vorhergehenden Ansprüche,
**dadurch gekennzeichnet**, dass die Verzahnungsgeometrie des Abtriebsrades (11) ballig ausgebildet ist.

16. Gurtstrafferantrieb (1) nach einem der vorhergehenden Ansprüche,
**dadurch gekennzeichnet**, dass die Schnecke (12) mit einem auf der Spindelwelle (13) verschiebbar angeordneten, den ersten und zweiten Verzahnungsabschnitt (a, b) aufweisenden Schneckenelement (17) und einem drehfest mit der Spindelwelle (13) verbundenen Antriebselement (18) ausgebildet ist, wobei das Schneckenelement (17) mit dem Antriebselement (18) drehgekoppelt ist und zwischen dem Schneckenelement (17) und dem Antriebselement (18) das Federelement (16) angeordnet ist.

## Claims

1. A belt tightener drive (1) for tightening a seat belt (2) capable of being wound up around a winding shaft (4), comprising
- a spindle shaft (13) driven by a drive unit (3), and
- a worm gear (10) with a worm (12) mounted on the spindle shaft (13) in a fixed manner in terms of torque and a driven wheel (11) meshing with the worm (12) and mounted on the winding shaft (4) in a rotationally fixed manner,
**characterized in that**
- the worm (12) has a first toothed portion (a) with a first tooth geometry (14), wherein the first toothed portion (a) meshes with the driven wheel (11) in the first position (I) of the worm (12),
- the worm (12) has at least one second toothed portion (b) adjoining the first toothed portion (a) and with a second tooth geometry (15), wherein the first and second tooth geometries (14, 15) are designed differently, and
- an axial displacement of the worm (12) is carried out - in a manner dependent upon an axial application of force into the worm (12) - between a first position (I), in which the worm (12) meshes with the driven wheel (11) by way of the first toothed portion (a), and a second position (II), which meshes with the driven wheel (11) by way of the second toothed portion (b) thereof.

2. A belt tightener drive (1) according to claim 1, **characterized in that** the worm (12) is arranged on the spindle shaft (13) in a manner displaceable between the first position (I) and the second position (II).

3. A belt tightener drive (1) according to claim 1 or 2, **characterized in that** a spring element (16) is provided which pre-stresses the worm (12) in the direction of the first position (I).

4. A belt tightener drive (1) according to any one of the preceding claims, **characterized in that** an actuator (20) is provided in order to produce the axial application of force into the worm (12).

5. A belt tightener drive (1) according to claim 4, **characterized in that** the actuator (20) and the spring element (16) are designed in such a way that the worm (12) is displaced out of the first position (I) into the second position (II) against the force of the spring element (16) in a manner dependent upon the axial application of force produced by the actuator (20).

6. A belt tightener drive (1) according to claim 4 or 5, **characterized in that** the actuator is designed in the form of a motor unit (20) with a toothed wheel (21) and the worm (12) has a toothed rack contour operatively connected to the toothed wheel (21).

7. A belt tightener drive (1) according to claim 4 or 5, **characterized in that** the actuator (20) is designed in the form of a magnet system (20) with a rocker switch (22) pivotable between two switching positions, wherein the rocker switch (22) is operatively connected to the worm (12) when the magnet system (20) is activated.

8. A belt tightener drive (1) according to claim 3, **characterized in that** the axial application of force into the worm (12) is produced by a load acting upon the driven wheel (11), wherein an axial displacement of the worm (12) from the first position (I) against the force of the spring element (16) into the second position (II) is produced in a manner dependent upon this load acting upon the driven wheel (11).

9. A belt tightener drive (1) according to claim 1, **characterized in that** the worm (12) is designed with a first and a second tooth geometry (14, 15) in which the pitches (P₁, P₂) have different values.

10. A belt tightener drive (1) according to claim 2, **characterized in that** the second tooth geometry (15) has a smaller pitch (P₂) than the first tooth geometry (14).

11. A belt tightener drive (1) according to claim 2 or 3, **characterized in that** the worm (12) is designed with a first and a second tooth geometry (14, 15) in which the value of the pitch (P₂) of the second tooth geometry (15) is a whole-number divisor of the value of the pitch (P₁) of the first tooth geometry (14).

12. A belt tightener drive (1) according to any one of the preceding claims, **characterized in that** the worm (12) is designed with a first and a second tooth geometry (14, 15) in which a continuous transition is provided between the first and the second tooth geometries (14, 15).

13. A belt tightener drive (1) according to claim 1, **characterized in that** the worm (12) is designed with a first and a second tooth geometry (14, 15) in which the second tooth geometry (15) is designed with a greater tooth thickness than the first tooth geometry (14).

14. A belt tightener drive (1) according to claim 6, **characterized in that** the worm (12) is designed with a first and a second tooth geometry (14, 15) in which the second tooth geometry (15) increases in a continuous manner starting with a tooth thickness corresponding to the tooth thickness of the first tooth geometry (14).

15. A belt tightener drive (1) according to any one of the preceding claims, **characterized in that** the tooth geometry of the driven wheel (11) is designed in a convex manner.

16. A belt tightener drive (1) according to any one of the preceding claims, **characterized in that** the worm (12) is formed with a worm element (17) arranged in a displaceable manner on the spindle shaft (13) and having the first and second toothed portions (a, b) and with a drive element (18) connected in a rotationally fixed manner to the spindle shaft (13), wherein the worm element (17) is coupled in a rotating manner to the drive element (18) and the spring element (16) is arranged between the worm element (17) and the drive element (18).

## Revendications

1. Dispositif de commande de tension de ceinture (1) pour permettre de tendre une ceinture de sécurité (2) pouvant être enroulée sur un arbre d'enroulement (4), comprenant :
une broche (13) entrainée par une unité d'entrainement (3), et
un engrenage à vis dans fin (10) comprenant une vis sans fin (12) montée avec un couple de rotation fixe sur la broche (13) et une roue entrainée (11) engrenant avec celle-ci et logée solidairement en rotation sur l'arbre d'enroulement (4),
**caractérisé en ce que** :
- la vis sans fin (12) comporte un premier segment denté (a) ayant une première géométrie de dents (14), dans une première position (I) de la vis sans fin (12) le premier segment denté (a) engrenant avec la roue entrainée (11),
- la vis sans fin (12) comporte au moins un second segment denté (b) ayant une seconde géométrie de dents (15) relié au premier segment denté (a), la première et la seconde géométrie de dents (14, 15) étant réalisées différemment, et
- en fonction de l'application d'une force axiale dans la vis sans fin (12) on obtient un déplacement axial de la vis sans fin (12) entre une première position (I) dans laquelle la vis sans fin (12) engrène par le premier segment denté (a) avec la roue entrainée (11) et une seconde position (II) dans laquelle elle engrène avec la roue entrainée (11) par son second segment denté (b).

2. Dispositif de commande de tension de ceinture (1) conforme à la revendication 1,
**caractérisé en ce que**
la vis sans fin (12) est montée coulissante entre la première position (I) et la seconde position (II) sur la broche (13).

3. Dispositif de commande de tension de ceinture (1) conforme à la revendication 1 ou 2,
**caractérisé en ce qu'**
il est prévu un élément élastique (16) qui précontraint la vis sans fin (12) en direction de la première position (I).

4. Dispositif de commande de tension de ceinture (1) conforme à l'une des revendications précédentes,
**caractérisé en ce qu'**
il est prévu un actionneur (20) pour permettre l'application d'une force axiale dans la vis sans fin (12).

5. Dispositif de commande de tension de ceinture (1) conforme à la revendication 4,
**caractérisé en ce que**
l'actionneur (20) et l'élément élastique (16) sont réalisés de sorte que la vis sans fin (12) soit déplacée de la première position (I) dans la seconde position (II) en fonction de l'application d'une force axiale produite par l'actionneur (20) contre la force de rappel de l'élément élastique (16).

6. Dispositif de commande de tension de ceinture (1) conforme à la revendication 4 ou 5,
**caractérisé en ce que**
l'actionneur est réalisé sous la forme d'une unité motrice (20) comportant une roue dentée (21) et la vis sans fin (12) comporte un contour de crémaillère (19) en liaison fonctionnelle avec la roue dentée (21).

7. Dispositif de commande de tension de ceinture (1) conforme à la revendication 4 ou 5,
**caractérisé en ce que**
l'actionneur est réalisé sous la forme d'un système magnétique (20) muni d'une bascule de commutation (22) pivotant entre deux positions de commutation, lorsque le système magnétique (20) est activé la bascule de commutation (22) étant en liaison fonctionnelle avec la vis sans fin (12).

8. Dispositif de commande de tension de ceinture (1) conforme à la revendication 3,
**caractérisé en ce que**
l'application de forces axiales dans la vis sans fin (12) est produite par une charge agissant sur le roue entrainée (11), en fonction de cette charge agissant sur la roue entrainée (11), un déplacement axial de la vis sans fin (12) de la première position (I) dans la seconde position (II) contre la force de rappel de l'élément élastique (16) étant effectué.

9. Dispositif de commande de tension de ceinture (1) conforme à la revendication 1,
**caractérisé en ce que**
la vis sans fin (12) est réalisée avec une première et une seconde géométrie de dents (14, 15), dans lesquelles les pentes (P₁, P₂) ont des valeurs différentes.

10. Dispositif de commande de tension de ceinture (1) conforme à la revendication 2,
**caractérisé en ce que**
la seconde géométrie de dents (15) a une pente (P₂) inférieure à celle de la première géométrie de dents (14).

11. Dispositif de commande de tension de ceinture (1) conforme à la revendication 2 ou 3,
**caractérisé en ce que**
la vis sans fin (12) est réalisée avec une première et une seconde géométrie de dents (14, 15), dans lesquelles la valeur de la pente (P₂) de la seconde géométrie de dents (15) est un diviseur entier de la valeur de la pente (P₁) de la première géométrie de dents (14).

12. Dispositif de commande de tension de ceinture (1) conforme à l'une des revendications précédentes,
**caractérisé en ce que**
la vis sans fin (12) est réalisée avec une première et une seconde géométrie de dents (14, 15), dans lesquelles une transition continue entre la première et la seconde géométrie de dents (14, 15) est prévue.

13. Dispositif de commande de tension de ceinture (1) conforme à la revendication 1,
**caractérisé en ce que**
la vis sans fin (12) est réalisée avec une première et une seconde géométrie de dents (14, 15), la seconde géométrie de dents (15) étant réalisée avec une épaisseur de dents supérieure à celle de la première géométrie de dents (14).

14. Dispositif de commande de tension de ceinture (1) conforme à la revendication 6,
**caractérisé en ce que**
la vis sans fin (12) est réalisée avec une première et une seconde géométrie de dents (14, 15), la seconde géométrie de dents (15) augmentant en continu en commençant avec une épaisseur de dents correspondant à l'épaisseur de dents de la premier géométrie de dent (14).

15. Dispositif de commande de tension de ceinture (1) conforme à l'une des revendications précédentes,
**caractérisé en ce que**
la géométrie de dents de la roue entrainée (11) est réalisée bombée.

16. Dispositif de commande de tension de ceinture (1) conforme à l'une des revendications précédentes,
**caractérisé en ce que**
la vis sans fin (12) est réalisée avec un premier élément de vis sans fin (17) monté coulissant sur la broche (13) et comprenant le premier et le second segment denté (a, b), et un élément d'entrainement (18) relié solidairement en rotation avec la broche (13), l'élément de vis sans fin (17) étant accouplé en rotation à l'élément d'entrainement (18) et l'élément élastique (16) étant monté entre l'élément de vis sans fin (17) et l'élément d'entrainement (18).
